# EUROPEAN PATENT APPLICATION

(11) **EP 3 056 453 A1**
(43) Date of publication of application: **17.08.2016**
(21) Application number: 13895296.5
(22) Date of filing: 11.10.2013
(51) Int. Cl.: B65G 1/137

(54) **TRANSPORT VEHICLE CONTROL DEVICE AND TRANSPORT VEHICLE CONTROL METHOD**

(71) Applicant: Hitachi, Ltd., Chiyoda-ku Tokyo 100-8280 (JP)
(72) Inventor: KAZAMA Yoriko, Tokyo 100-8280 (JP); KIMURA Junichi, Tokyo 100-8280 (JP); WATANABE Takashi, Tokyo 100-8280 (JP); HIRAYASU Tetsuya, Kudamatsu-shi Yamaguchi 744-0002 (JP)
(74) Representative: MERH-IP Matias Erny Reichl Hoffmann Patentanwälte PartG mbB
(86) International application number: PCT/JP2013/077733
(87) International publication number: WO 2015/052830

(57) **Abstract**

A transport vehicle control device of the present invention includes: a storage portion that stores map information in which a state of a cell where a rack is arranged is saved for each cell; a data transceiver that receives the latest state of a cell from a transport vehicle which transports the rack; a map manager that updates the map information, each time the data transceiver receives the latest state of the cell, using the latest state of the cell received; and a route searcher that searches for a route for the transport vehicle transporting the rack based on the map information updated. The transport vehicle control device of the present invention further includes a cell-for-rearranged-rack determiner that determines a cell into which the rack is rearranged on the basis of a usage frequency of articles to be stored on the rack.

## Description

### TECHNICAL FIELD

The present invention relates to a transport vehicle control device and a transport vehicle control method.

### BACKGROUND ART

Moving stored articles within a warehouse has vastly been automated. For example, in a large-scale warehouse, unmanned transport vehicles move stored articles.

In an example of Patent Document 1, "inventory holders" are arranged in a warehouse in a grid pattern that are containers in which articles are stored. A "mobile drive unit" capable of propelling itself through passages between the inventory holders moves the articles by lifting the "inventory holders." Then, a "management module" generates a route for the mobile drive unit to take, according to the state of the working space and the state of the mobile drive unit.

### PRIOR ART DOCUMENT

### Patent Document

Patent Document 1: Japanese Translation of PCT International Application Publication No. 2009-541176 (such as in paragraphs 0042 and 0043)

### SUMMARY OF THE INVENTION

### Problems to Be Solved

An environment in the warehouse changes in real time. For example, it is assumed that many transport vehicles are used at the same time, each transporting a shelf in which articles are stored. Then, there can be a sequence of events at a certain place such that there is a shelf at some point of time, the shelf no longer exists at the next point of time, and then the shelf is returned after that. In addition, there can be a case where articles that have fallen on the floor in the course of transportation interfere with the transport vehicles running.

The technique of Patent Document 1 is not flexible enough to reflect changes in the environment for planning a route, and then not suitable for revising the planned route in real time. In addition, the mobile drive unit returns the inventory holder to the original position. This causes a mobile drive unit to travel the same route many times for transporting the same articles, and then to have lower transportation efficiency if the route is no longer the shortest route.

Accordingly, the present invention is intended to revise a route for a vehicle in real time and to revise a location for a shelf to be returned depending on the usage frequency of articles.

### Solution to Problems

A transport vehicle control device of the present invention includes: a storage portion that stores map information in which a state of a cell where a rack is arranged is saved for each cell; a data transceiver that receives the latest state of the cell from a transport vehicle which transports the rack; a map manager that updates the map information, each time the data transceiver receives the latest state of the cell, using the latest state of the cell received; and a route searcher that searches for a route for the transport vehicle transporting the rack based on the map information updated.

The transport vehicle control device of the present invention further includes a cell-for-rearranged-rack determiner that determines a cell into which the rack is rearranged on the basis of a usage frequency of articles to be stored on the rack.

Others will be described in the detailed description of embodiments.

### Advantageous Effects of the Invention

The present invention allows for revising a route for a transport vehicle in real time, and revising the location for a shelf to be returned depending on the usage frequency of articles.

### BRIEF DESCRIPTION OF THE DRAWINGS

FIG. 1A is a perspective view of a shelf;
FIG. 1B is a perspective view of a transport vehicle;
FIG. 2A is an illustration of an exemplary arrangement of shelves;
FIG. 2B is an example of an overall floor plan of a warehouse;
FIG. 3 is another example of an overall floor plan of the warehouse;
FIG. 4 is a block diagram of the transport vehicle control device and the transport vehicle;
FIG. 5A is a chart showing an example of map information;
FIG. 5B is a chart showing an example of article information;
FIG. 5C is a chart showing an example of a report transmitted by the transport vehicle to the transport vehicle control device;
FIG. 6A is a chart showing an example of route information;
FIG. 6B is an illustration of a practical example of an instruction route and instruction operation;
FIG. 7 is a sequence chart showing communications between the transport vehicle control device and two or more transport vehicles;
FIG. 8 is a flowchart of a map information update procedure;
FIG. 9A is a flowchart of a cell-for-rearranged-shelf determination procedure;
FIG. 9B is a flowchart of a shelf rearrangement procedure; and
FIGS. 10A, 10B, and 10C are illustrations of a shelf rearrangement procedure.

### DETAILED DESCRIPTION OF EMBODIMENTS

Hereinafter, an embodiment according to the invention will be described with reference to the drawings as appropriate.

### [Shelf and Transport Vehicle]

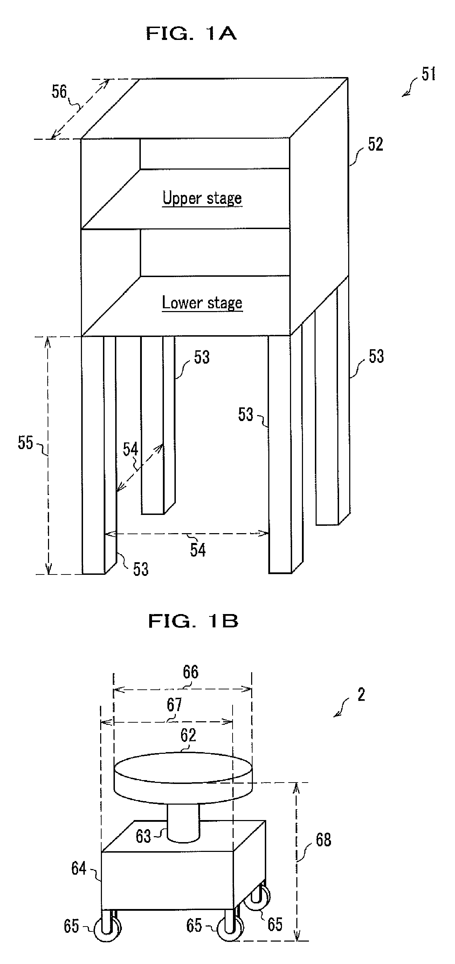

Appearances of a shelf 51 will be described with reference to FIG. 1A. The shelf 51 includes a storage portion 52 having a square shape in a plan view, for example, and four legs 53. The storage portion 52 has one or more stages (upper and lower stages in an example in FIG. 1A) to keep articles on each of the stages.

Appearances of a transport vehicle 2 will be described with reference to FIG. 1B. The transport vehicle 2 includes a shelf support table 62 in a disk shape, a shelf support column 63 in a cylindrical shape, a body 64 having a square shape in a plan view, for example, and four wheels 65. The shelf support table 62 lifts a bottom surface of the storage portion 52 of the shelf 51. The shelf support column 63 is a member that connects the shelf support table 62 with the body 64. The shelf support column 63 is capable of freely varying its height. The wheel 65 is capable of freely changing directions. Note that the "rack" is equivalent to the shelf.

A diameter 66 of the shelf support table 62 and a length 67 of one side of the body 64 are shorter than a distance 54 between the two adjacent legs 53 of the shelf 51. As the height of the shelf support column 63 varies, an overall height 68 of the transport vehicle 2 varies. When the transport vehicle 2 travels alone without supporting the shelf 51, the height 68 is shorter than a height 55 of the leg 53 of the shelf 51. That is, the transport vehicle 2 is capable of travelling on the floor between the legs 53 under the storage portion 52 of the shelf 51, without contacting the rack 51. When the transport vehicle 2 travels with supporting (in a state of lifting) the shelf 51, the height 68 is longer than the height 55 of the leg 53 of the shelf 51. That is, the transport vehicle 2 is capable of transporting the shelf 51, in a state of the leg 53 of the shelf 51 being lifted from the floor.

### [Shelf Arrangement]

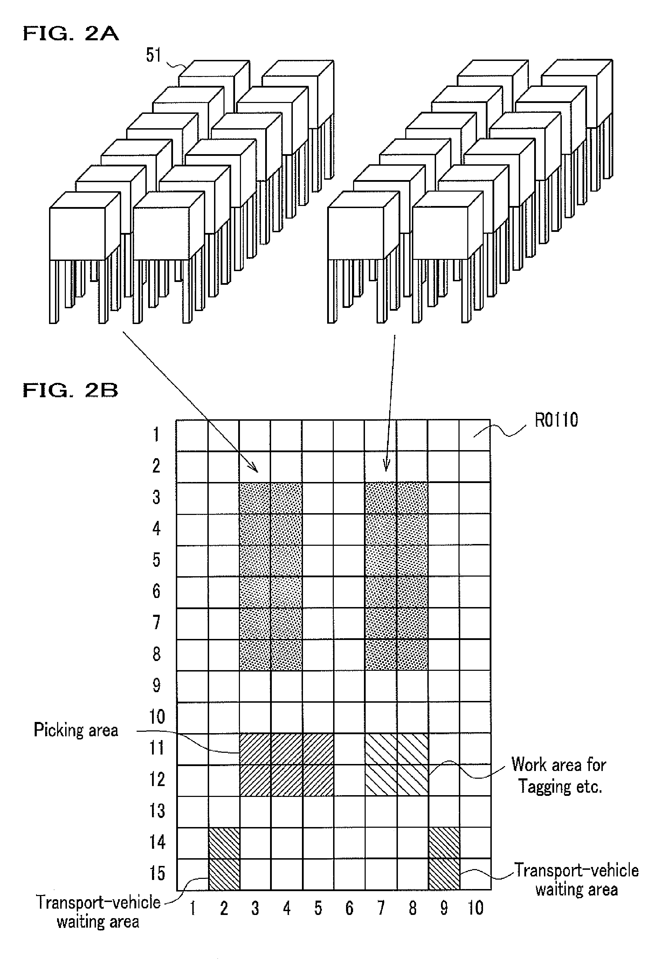

An exemplary arrangement of the shelves 51 will be described with reference to FIG. 2A. The shelves 51 are arranged in a grid pattern on the floor of the warehouse. Typically, a plurality of shelves 51 are arranged (as viewed from above) so as to form rectangular blocks.

An example of an overall floor plan of the warehouse will be described with reference to FIG. 2B. The floor of the warehouse is managed as a set of squares in accordance with the shape of the shelf 51. Each square is referred to as a "cell." The length of one side of the cell is slightly longer than the length 56 of one side of the storage portion 52 of the shelf 51. In FIG. 2B, cells are regularly arranged in 15 rows by 10 columns. Each cell has a cell ID such as "R0110" for uniquely identifying itself. With the cell ID "R0110" for the cell at the upper right corner in FIG. 2B, "01" is to identify the row and "10" is to identify the column. That is, the cell ID also indicates position information of the cell.

The twelve shelves 51 are arranged in a rectangular area having a cell "R0303" at the upper left corner and a cell "R0804" at the lower right corner. Similarly, the twelve shelves 51 are also arranged in a rectangular area having a cell "R0307" at the upper left corner and a cell "R0808" at the lower right corner.

A rectangular area having a cell "R1103" at the upper left corner and a cell "R1205" at the lower right corner is a picking area. The transport vehicle 2 transports a shelf 51 from a certain cell to the picking area. Then, a worker in the picking area takes out articles from the shelf 51. Typically, the shelf 51 is managed under an air-conditioning requirement depending on the nature of the articles to be stored (cold in case of food). The picking area is managed under an air-conditioning requirement for the worker to have the highest working efficiency (partitions or the like are not shown).

A rectangular area having a cell "R1107" at the upper left corner and a cell "R1208" at the lower right corner is a work area. The transport vehicle 2 transports a shelf 51 from a certain cell into the work area. Then, the worker in the work area executes a predetermined work. The predetermined work means, for example, packaging, inspecting, tagging, or measuring a weight of, articles.

Cells "R1402," "R1502," "R1409," and "R1509" are transport-vehicle waiting areas. The transport vehicle 2 waits in the transport-vehicle waiting area during a time when there is no specific transportation work.

The shelf 51 can be placed in any cell other than "placement disallowed" cells belonging to a shelf-placement-disallowed area to be described later. Among the transport vehicles 2, those transporting the shelves 51 are referred to as "loaded vehicles." On the other hand, those not transporting the shelves 51 are referred to as "unloaded vehicles." The unloaded vehicles can travel in any cells other than "non-travelable" cells to be described later. The loaded vehicle can travel in any cell which is other than "non-travelable" cell to be described later, and is in a "no shelf" state to be described later.

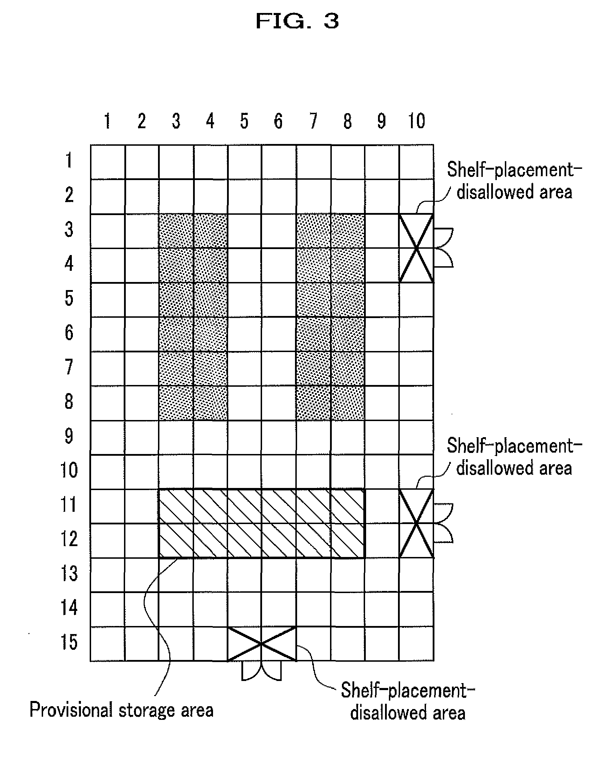

Another example of an overall floor plan of the warehouse will be described with reference to FIG. 3. The shelf-placement-disallowed areas are such as those located in front of the entrance or right under an access panel on the ceiling, where the shelves 51 are not allowed to be arranged. A provisional storage area is an area where those shelves 51 frequently picked are temporarily placed (to be described later in detail). For illustration purpose, respective areas are separately described in FIG. 2B and FIG. 3. Of course, those areas shown in FIG. 2B and those areas shown in FIG. 3 are present at the same time on the same floor, without each area having any overlapping.

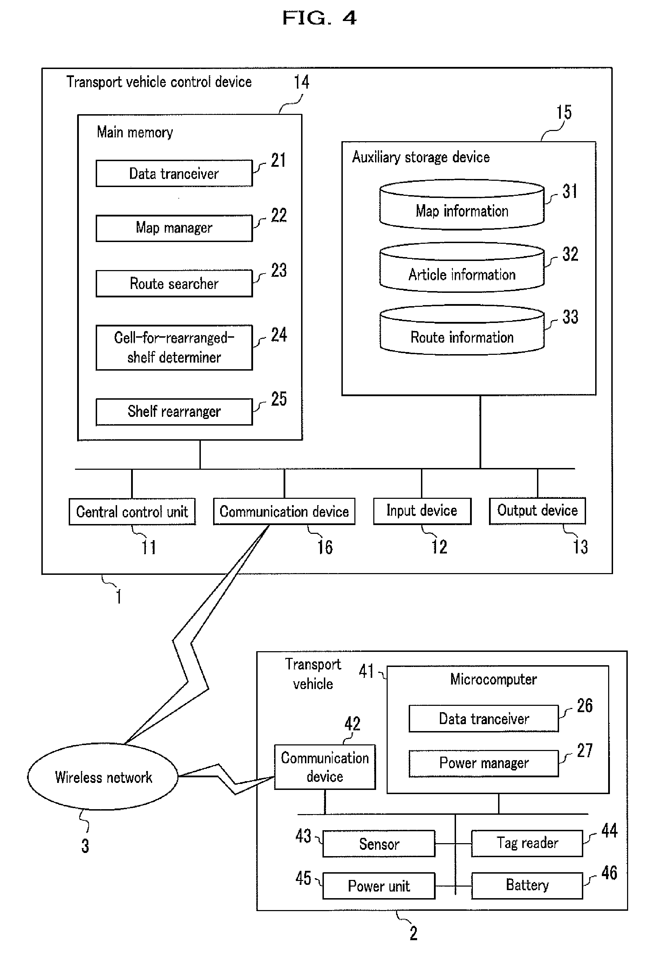

Configurations of a transport vehicle control device 1 and the transport vehicle 2 will be described with reference to FIG. 4. The transport vehicle control device 1 is a general purpose computer. The transport vehicle control device 1 includes a central control unit 11, an input device 12 such as a keyboard and a mouse, an output device 13 such as a display, a main memory 14, an auxiliary storage device 15, and a communication device 16. These are interconnected by a bus. A data transceiver 21, a map manager 22, a route searcher 23, a cell-for-rearranged-shelf determiner 24, and a shelf rearranger 25 are programs loaded into the main memory 14. Hereinbelow, in a case where one of these components is described as a subject, it means that the central control unit 11 retrieves each program from the auxiliary storage device 15, loads it into the main memory 14, and then embodies a function of each program (to be described later in detail). The auxiliary storage device 15 stores map information 31, article information 32, and route information 33 (to be described later in detail). The transport vehicle control device 1 may communicatively be connected via a wireless network 3 to one or more transport vehicles 2.

The transport vehicle 2 includes a microcomputer 41, a communication device 42, a sensor 43, a tag reader 44, a power unit 45, and a battery 46. These are interconnected by a bus or a power line. The sensor 43 radiates ultrasonic waves or photographs images of its surroundings, for example, to detect the presence of obstacles (fallen articles etc.) in a cell. The tag reader 44 reads information (such as a shelf ID and an article ID to be described later) stored in a tag, for example, affixed to a portion of the shelf 51. The power unit 45 is, for example, a motor for driving the wheel 65, a motor for controlling the direction of the wheel 65, a motor for changing the length of the shelf support column 63. The battery 46 supplies power as power source for these motors.

The microcomputer 41 includes a central control unit, a main memory, and an auxiliary storage (not shown). A data transceiver 26 and a power manager 27 are programs. The central control unit retrieves each program from the auxiliary storage, loads it into the main memory, and then embodies a function of each program.

### [Map Information]

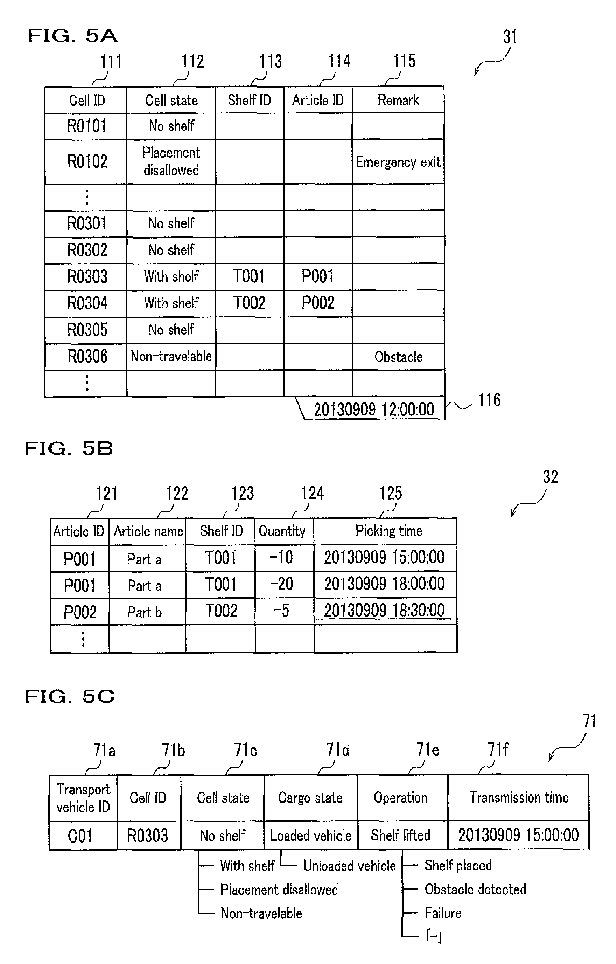

The map information 31 will be described with reference to FIG. 5A. The map information 31 is stored with, in association with a cell ID stored in a cell ID field 111, a state of a cell in a cell state field 112, the shelf ID in a shelf ID field 113, an article ID in an article ID field 114, and a remark in a remark field 115.

The cell ID in the cell ID field 111 is, as described above, an identifier for uniquely identifying the cell.

A state of a cell in the cell state field 112 is a current state of the cell, and indicates one of the following four states.
"No Shelf:" this indicates that there is no shelf 51 in the cell;
"With shelf:" this indicates that there is a shelf 51 in the cell;
"Placement disallowed:" this indicates that the cell belongs to the "shelf placement disallowed area" described above and placing a shelf 51 in the cell is disallowed; and
"Non-travelable:" this indicates that the transport vehicle 2 is unable to travel in the cell, for example, because an article has fallen (spilled) in the cell, or the transport vehicle 2 in failure is parked.

The shelf ID in the shelf ID field 113 is an identifier for uniquely identifying the shelf 51.

The article ID in the article ID field 114 is an identifier for uniquely identifying an article to be stored in the shelf 51. Those records having a cell state other than the "with shelf" have blanks in the shelf ID field 113 and the article ID field 114.

The remark in the remark field 115 is a kind of memorandum and can be any information. Here, it describes the reason for the cell state indicating "placement disallowed" or "non-travelable."

The records in the map information 31 exist as many as the number of cells. The data transceiver 21 of the transport vehicle control device 1 receives a report 71 (see FIG. 5C; to be described later in detail) in real time from the data transceiver 26 of a traveling transport vehicle 2. Then, the map manager 22 of the transport vehicle control device 1 constantly maintains the map information 31 in the latest state, based on the report 71 received. A field 116 is recorded with date and time of day at the time of the latest update.

### [Article Information]

The article information 32 will be described with reference to FIG. 5B. The article information 32 is stored with, in association with the article ID stored in the article ID field 121, an article names in an article name field 122, a shelf ID in a shelf ID field 123, a quantity in a quantity field 124, and a picking time in a picking time field 125.

The article ID in the article ID field 121 indicates an article ID for identifying an article which has been picked (taken out) in the picking area.

The article name in the article name field 122 indicates a name of the article picked.

The shelf ID in the shelf ID field 123 indicates a shelf ID for identifying the shelf 51 which has kept the article picked in the picking area.

The quantity in the quantity field 124 indicates a quantity of the articles picked. The unit depends on the article. If the article is a part, for example, the unit is "the number of parts." The quantity may have a positive or negative sign. If the quantity has a negative value, it indicates that the normal picking (take out) has been made. If the quantity has a positive value, it indicates that the article is replenished.

The picking time in the picking time field 125 can be one of the following two types:
Type 1) sometime in the future: if there is a plan of picking sometime in the future based on such as a plan of shipping an article or articles from the warehouse, the picking time indicates a date and time of day in the future; the picking time is underscored in this case;
Type 2) sometime in the past: if a worker has actually made picking in the picking area, the picking time indicates a date and time of day at that time; and the picking time is not underscored in this case.

For a record of the article information 32, a record of type 1 is first created, and then a record of type 2 is created every time actual picking is made and stored as article information 32. Normally, the transport vehicle control device 1 receives records of type 1 and type 2 created by another device which manages picking. However, the transport vehicle control device 1 may create a record of type 2 based on data obtained from the transport vehicle 2.

### [Report]

A report 71 will be described with reference to FIG. 5C. The data transceiver 26 of the transport vehicle 2 transmits the report 71 to the transport vehicle control device 1. The data transceiver 21 of the transport vehicle control unit 1 receives the report 71. The data transceiver 26 of the transport vehicle 2 transmits one report 71 every time it passes through a cell, while the transport vehicle 2 is traveling, regardless of whether any operation such as "shelf lifted" is performed in the cell. The report 71 for each transmission includes a transport vehicle ID 71 a, a cell ID 71 b, a cell state 71 c, a cargo state 71 d, an operation 71e, and a transmission time 71f.

The transport vehicle ID 71 a is an identifier for uniquely identifying the transport vehicle 2.

The cell ID 71 b is a cell ID for identifying a cell through which the transport vehicle 2 has passed. The transport vehicle 2, such as by the sensor 43 receiving a radio wave transmitted from the floor or ceiling of the cell, obtains the cell ID included in the radio wave.

The cell state 71 c indicates one of the four states of the cell, as described above, through which the transport vehicle 2 has traveled. However, "with shelf" and "no shelf" are based on a state at the time of departure from the cell. For example, if the transport vehicle 2 has departed after lifting the shelf 51, the cell state 71 c indicates "no shelf."

The cargo state 71d indicates either an "unloaded vehicle" or a "loaded vehicle." However, the indication is based on a state at the time of departure from the cell. For example, if the transport vehicle 2 has departed in a state of lifting the shelf 51, the cargo state 71d indicates the "loaded vehicle."

The operation 71e indicates an operation of the transport vehicle 2, including at least five operations below;
"Shelf lifted:" this indicates that the shelf support table 62 of the transport vehicle 2 has lifted the shelf 51; note that the operation and the shelf ID of the shelf 51 operated may be indicated together such as "shelf lifted, T001;" in addition, the article ID of the article stored in the shelf 51 may also be indicated together such as "shelf lifted, T001, P001" (the same applies to "shelf placed" which immediately follows);
"Shelf placed:" this indicates that the shelf support table 62 of the transport vehicle 2 has left the shelf 51 to place the shelf 51 on the floor;
"Obstacle detected:" this indicates that the sensor 43 of the transport vehicle 2 has detected a presence of something (fallen article or the like) which inhibits the transport vehicle 2 from traveling through the cell;
"Failure:" this indicates that the transport vehicle 2 has failed and has been stuck in that cell; and
"-:" this indicates that the transport vehicle 2 has not made any particular operation in the cell.

The transmission time 71f indicates a date and time of day at the time of the report 71 being transmitted.

### [Relationship among Cell State, Cargo State, and Operation]

The transport vehicle 2 having a cargo state of "unloaded vehicle" may transmit either a cell state of "no shelf" (simply passing through with no shelf loaded) or "with shelf" (departing after placing the shelf 51). Of course, the transport vehicle 2 having a cargo state of "loaded vehicle" only transmits a cell state of "no shelf" (departing after lifting the shelf 51). If the operation indicates "shelf placed," the cell state always indicates "with shelf." If the operation indicates "shelf lifted," the cell state always indicates "no shelf." The cargo state indicates the "loaded vehicle" during a period from the operation of "shelf lifted" to the operation of "shelf placed." In other periods, the cargo state indicates the "unloaded vehicle."

### [Route Information]

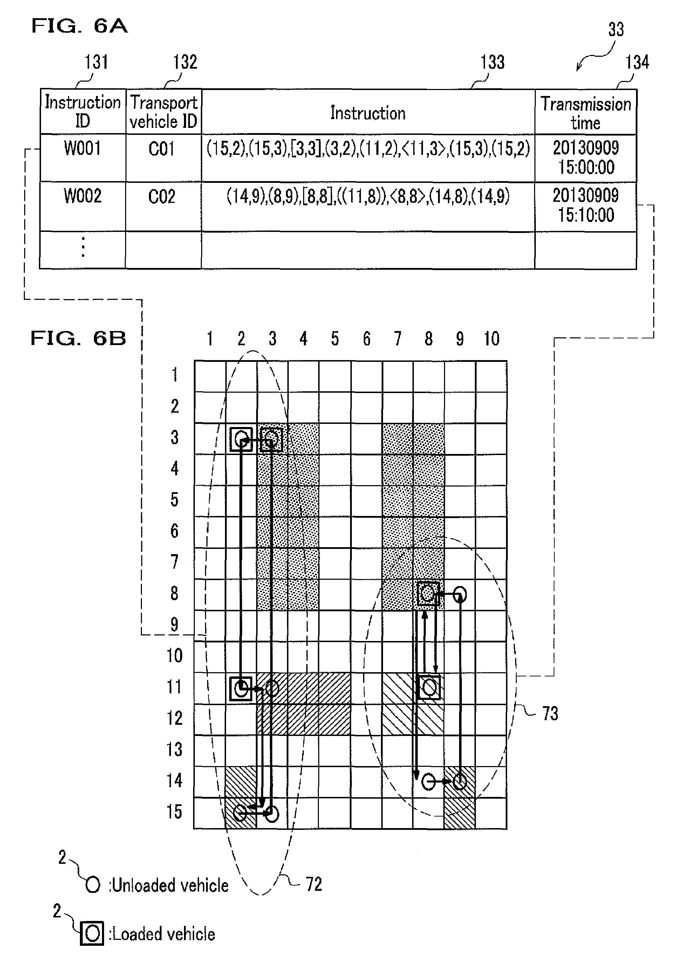

The route information 33 will be described with reference to FIG. 6A. The route information 33 is stored with, in association with an instruction ID stored in an instruction ID field 131, the transport vehicle ID in a transport vehicle ID field 132, an instruction in an instruction field 133, and the transmission time in a transmission time field 134.

The instruction ID in the instruction ID field 131 indicates an identifier for uniquely identifying a record of the route information 33.

The transport vehicle ID in the transport vehicle ID field 132 indicates a transport vehicle ID for identifying the transport vehicle 2 that receives an instruction (to be described immediately below) from the transport vehicle control device 1.

The transmission time in the transmission time field 134 indicates a date and time of day at the time of the instruction being transmitted.

The instruction in the instruction field 133 is information indicating a combination of an "instruction route" and an "instruction operation." In general, there can be two or more candidates for a route from one cell as a start point to the other cell as an end point. Individual routes can be represented by arranging the cells for the transport vehicle 2 to travel in order of traveling. The route searcher 23 determines a route having the shortest travel distance among the two or more candidates as the "instruction route." The instruction operation is an operation that is transmitted (instructed) by the route searcher 23 of the transport vehicle control device 1 to the transport vehicle 2. Hereinbelow, the instruction route is simply referred to as the "route" and the instruction operation is simply referred to as the "operation", as far as there is no risk of misunderstanding.

### [Specific Example of Instruction]

Specific examples of the instruction will be described with reference to FIG. 6B. Movement of the transport vehicle 2 (represented by a circle) within an oval 72 corresponds to an instruction "(15, 2), (15, 3), [3, 3], (3, 2), (11, 2), <11, 3>, (15, 3), (15, 2)" of a record in the first row shown in FIG. 6A. Numbers in parentheses indicate the row and column of the cell, respectively. Therefore, two or more brackets in a row indicate the "instruction route." Among the brackets, [] and < > indicate operations to be performed in the respective cells by the transport vehicle 2.
1) The first "(15, 2)" indicates that the transport vehicle 2 starts travelling at the cell "R1502" (cell at the fifteenth row and at the second column; the same applies to others).
2) The next "(15, 3)" indicates that the transport vehicle 2 then travels to the cell "R1503."
3) The next "[3, 3]" indicates that the transport vehicle 2 then travels to the cell "R0303," and parks in the cell to lift the shelf 51 placed in the cell. Note that the transport vehicle 2 is indicated as the "unloaded vehicle" until arriving to the cell "R0303." This allows the transport vehicle 2 to travel through the cells having a cell state of "with shelf," such as "R0803." Then, after departing from the cell "R0303," the transport vehicle 2 is indicated as the "loaded vehicle." This inhibits the transport vehicles 2 from traveling through the cells having a cell state of "with shelf," such as "R0403."
4) The next "(3, 2)" indicates that the transport vehicle 2 then travels to the cell "R0302."
5) The next "(11, 2)" indicates that the transport vehicle 2 then travels to the cell "R1102."
6) The next "<11, 3>" indicates that transport vehicle 2 then travels to the cell "R1103," and parks in the cell to place the shelf 51, which has been transported thereto, on the floor of the cell. Note that the transport vehicle 2 is again indicated as the "unloaded vehicle" after departing from the cell "R0303." This allows the transport vehicle 2 to travel through even the cells having a cell state of "with shelf."
7) The next "(15, 3)" indicates that the transport vehicle 2 then travels to the cell "R1503."
8) The last "(15, 2)" indicates that the transport vehicle 2 completes traveling at the cell "R1502" as the end point.

In the movement within the oval 72, the transport vehicle 2 has departed from the transport-vehicle waiting area, has transported the shelf 51 placed in the cell "R0303" to the cell "R1103," and then has returned to the transport-vehicle waiting area, as a prerequisite for the worker to make picking in the picking area. The cell state of the cell "R0303" has changed from "with shelf" to "no shelf." The cell state of the cell "R1103" has changed from "no shelf" to "with shelf."

Similarly, movement of the transport vehicle 2 within an oval 73 corresponds to an instruction "(14, 9), (8, 9), [8, 8], ((11, 8)), <8, 8>, (14, 8), (14, 9)" of a record in the second row shown in FIG. 6A. Similar description will be omitted, and "((11, 8))" indicates that the transport vehicle 2 parks in the cell "R1108" and waits while the worker is working. In the movement within the oval 73, the transport vehicle 2 has departed from the transport-vehicle waiting area, and has transported the shelf 51 placed in the cell "R0808" to the cell "R1108," as a prerequisite for the worker to do tagging in a working area. In addition, after the tagging is completed, the transport vehicle 2 returns the shelf 51 into the cell "R0808," and then returns to the transport-vehicle waiting area. The cell state of the cell "R0808" has changed from "with shelf" to "no shelf," and then to "with shelf." The cell state of the cell "R1108" has changed from "no shelf" to "with shelf," and then to "no shelf."

### [Communication between Transport Vehicle Control Device and two or more Transport Vehicles]

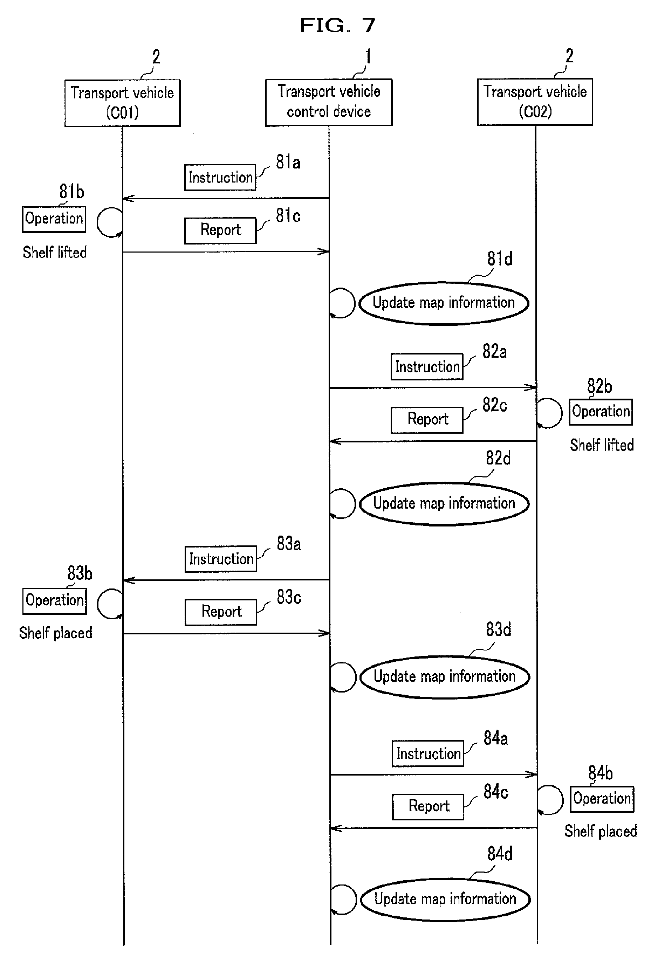

Communication between the transport vehicle control device 1 and two or more transport vehicles 2 will be described with reference to FIG. 7. In FIG. 7, the time passes downward from the top of the drawing. It is assumed that two transport vehicles 2 are currently traveling. They have the transport vehicle IDs of "C01" and "C02." The transport vehicle control device 1 is in communication with "C01" as well as "C02."

Reference numerals 81a, 81b, 81c, and 81d constitutes a set of processing. The transport vehicle control device 1 transmits an instruction 81a to the transport vehicle "C01." It is assumed, for example, that the instruction includes "[4, 6]." Accordingly, the transport vehicle "C01" lifts a certain shelf 51 in the cell "R0406." This is an operation 81b. After that, the transport vehicle "C01" transmits a report 81c (having the same data format as the report 71 in FIG. 5C) to the transport vehicle control device 1. Then, the transport vehicle control device 1 updates the cell state of the record for the cell "R0406" in the map information 31 (see FIG. 5A) from "with shelf" to "no shelf." Based on the map information 31 updated, the transport vehicle control device 1 searches for a route through which the other transport vehicle "C02" travels. Of course, the search takes the update result from "with shelf" to "no shelf" into account. Accordingly, the route through which the transport vehicle "C02" travels is also affected by the update result.

Reference numerals 82a, 82b, 82c, and 82d also constitute a set of processing. In addition, the same is true for subsequent reference numerals 83a to 83d and 84a to 84d. After all, the map information 31 is updated under the influence of all previous operations by the transport vehicles 2.
1) A map information update 81 d comes from an operation 81 b by the transport vehicle "C01." Accordingly, an instruction 83a is not changed to something different with respect to the instructions 81 a for the reason of having the map information update 81d. This is because the transport vehicle control device 1 is aware of the operation 81 b at the time of transmitting the instruction 81 a.
2) A map information update 82d comes from an operation 82b by the transport vehicle "C02." Accordingly, an indication 83a may be changed with respect to the instruction 81 a for the reason of having the map information update 82d. In this case, as the operation 82b is "shelf lifted," a route to be included in the instruction 83a is likely to be shorter than the route that has been included in the instruction 81 a. This is because a route for the transport vehicle "C01" has been searched on the condition that the cell where the operation 82b of "shelf lifted" is made remains to have the shelf 51, but now a route can be searched again on a less restricted condition that the cell has no shelf 51.
3) A map information updating 83d comes from an operation 83b by the transport vehicle "C01." Accordingly, an instruction 84a may be changed with respect to the instruction 82a for the reason of having the map information update 83d. In this case, as the operation 83b is "shelf placed," a route to be included in the instruction 84a is likely to be longer than the route that has been included in the instruction 82a. This is because the transport vehicle "C01" has placed the shelf 51 in the cell through which the transport vehicle "C02" is planned to travel, a route need to be searched again on a more restricted condition which is contrary to 2) above.

The same holds true even when the transport vehicle "C01" is interchanged with the transport vehicle "C02."

### [Operation Procedures]

Hereinbelow, operation procedures of the present embodiment will be described. There are three operation procedures. The first one is a "map information update procedure" in which the transport vehicle control device 1 updates the map information 31 every time upon receiving the report 71 from the transport vehicle 2. The second one is a "cell-for-rearranged-shelf determination procedure" in which cells to be arranged with the shelves 51 are revised depending on the picking frequency. The third one is a "shelf rearrangement procedure" in which the shelves 51 are actually moved to the revised cells.

### [Map Information Update Procedure]

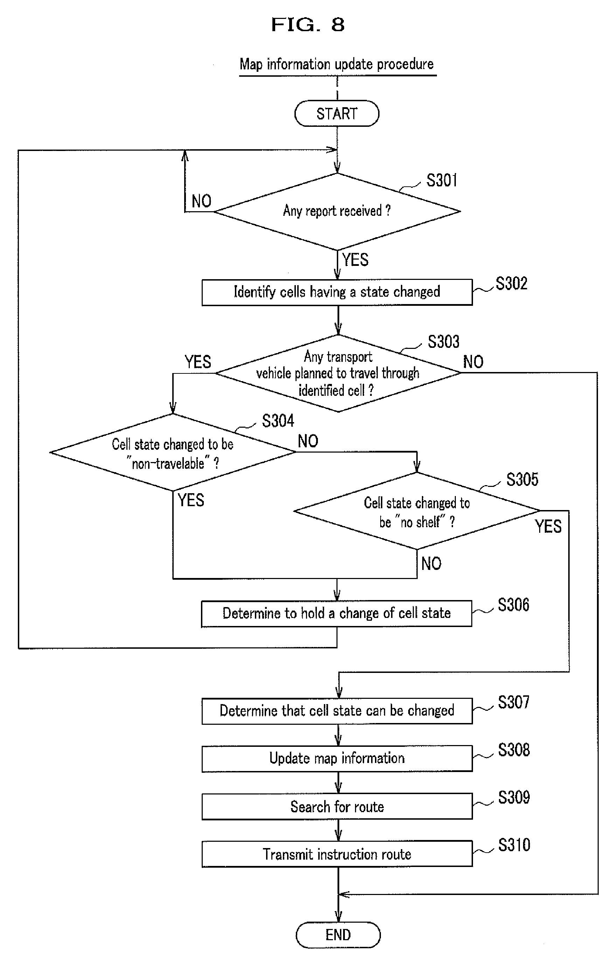

The map information update procedure will be described with reference to FIG. 8.

In step S301, the data transceiver 21 of the transport vehicle control device 1 determines whether it has received any report 71. Specifically, if the data transceiver 21 has received a report 71 (see FIG. 5C), which indicates that a state of a cell has been changed, from any of the transport vehicles 2 ("YES" in step S301), the process proceeds to step S302. If the data transceiver 21 has not received any report 71 ("NO" in step S301), the data transceiver 21 waits until it receives a report 71. A report 71 such as only indicating that the transport vehicle 2 has passed through the cell is ignored.

In step S302, the map manager 22 of the transport vehicle control device 1 identifies cells having a state changed. Now, it is assumed that the map information 31 is in a state as shown in FIG. 5A. It is also assumed that the cell ID included in the received report 71 is "R0303," a cell state is "no shelf," a cargo state is "loaded vehicle," and the operation is "shelf lifted, T001, P001." Then, the cell state of "with shelf" on the sixth row in FIG. 5A is different from the cell state of "no shelf" included in the report 71. In this case, the map manager 22 identifies the cell "R0303" as the cell having a state changed. Note that the identified cell of "R0303" is called an "identified cell," and the record of the map information 31 for the identified cell is also referred to as a "candidate-for-change map information record."

In step S303, the map manager 22 determines whether there is any transport vehicle 2 which is planned to travel through the identified cell. Specifically, the map manager 22 determines whether there is any record in the route information 33 (see FIG. 6A) which satisfies all of the following conditions. Such a record is also referred to as a "candidate-for-change route information record."
- The transmission time falls between the present time and a predetermined period of time (e.g., one minute) earlier; and
- The route contained in the instruction includes the "identified cell."

If there is any candidate-for-change route information record ("YES" in step S303) as a result of the determination, the map manager 22 temporarily stores all the candidate-for-change route information records in the main memory 14, and proceeds to step S304. If there is no candidate-for-change route information record ("NO" in step S303), the map information update procedure ends.

In step S304, the map manager 22 determines whether the change causes the cell state to be "non-travelable." Specifically, if the cell information in the candidate-for-change map information record is other than "non-travelable" and the cell state in the report 71 received is "non-travelable" ("YES" in step S304), the map manager 22 proceeds to step S306. Otherwise ("NO" in step S304), the map manager 22 proceeds to step S305.

In step S305, the map manager 22 determines whether the change causes the cell state to be "no shelf." Specifically, if the cell information in the candidate-for-change map information record is "with shelf" and the cell state of the report 71 received is "no shelf" ("YES" in step S305), the map manager 22 proceeds to step S307. Otherwise ("NO" in step S305), the map manager 22 proceeds to step S306.

In step S306, the map manager 22 determines to hold a change of the cell state. Specifically, the map manager 22 determines not to change the candidate-for-change map information record. After that, the map manager 22 returns to step S301.

In step S307, the map manager 22 determines that the cell state can be changed. Specifically, the map manager 22 determines to change the candidate-for-change map information record.

In step S308, the map manager 22 updates the map information 31. Specifically, the map manager 22 updates the cell state of the candidate-for-change map information record with the cell information included in the report 71 received.

In step S309, the route searcher 23 in the transport vehicle control device 1 searches for a route.

Specifically, the route searcher 23 first obtains one candidate-for-change route information record which is not processed yet. In this case, it is assumed, for example, that the record in the first row in FIG. 6A is obtained.

Second, the route searcher 23 obtains the starting point, transit points, and the end point of the obtained record. In this example, the starting point of "(15, 2)," the transit points of "[3, 3]" and "<11, 3>", and the end point of "(15, 2)" are obtained. The transit point is a cell where the transport vehicle 2 operates "shelf lifted" or "shelf placed."

Third, the route searcher 23 obtains the shortest route as the instruction route among the routes satisfying all of the following conditions. Here, the route searcher 23 may use an existing search technology such as Dijkstra's algorithm.
- The route runs through the starting point, the transit point of "shelf lifted," the transit point of "shelf placed," and the end point obtained in the second portion of step S309 in this order;
- The route does not include a cell having a cell state of "non-travelable" in the latest map information 31; and
- The route does not include a cell having a cell state of "with shelf" in the latest map information 31 between the transit point of "shelf lifted" and the transit point of "shelf placed."

Fourth, the route searcher 23 creates a new record of the route information 33 to store the transport vehicle ID of the candidate-for-change route information record into the transport vehicle ID field 132 of the record created. Then, the route searcher 23 stores the instruction ID that has newly been numbered into the instruction field 131, and the present time into the transmission time field 134. In addition, the route searcher 23 creates an instruction based on the instruction route obtained in the third portion of step S309 to store into the instruction field 133. The instruction to be stored at this time includes transit points of "[3, 3]" and "<11, 3>."

Fifth, the route searcher 23 designs the instruction stored in the instruction field 133 to display on the output device 15 of the transport vehicle control device 1. The route searcher 23 separately displays the designs, such as the oval 72 in FIG. 6B, one before and the other after the update.

In step S310, the data transceiver 21 of the transport vehicle control device 1 transmits an instruction route. Specifically, the data transceiver 21 transmits the instruction record created in the fourth portion of step S309 to the transport vehicle 2 which is identified in the transport vehicle ID of the candidate-for-change route information record. After that, the map information update procedure is completed.

Note that the processing in steps S309 and S310 is repeated until there is no more candidate-for-change route information record which is not processed yet.

### [Modification of Map Information Update Procedure]

The user can set a path that leads to processing in step S306 or S307 in any way. In the example described above, if a cell is changed to have a state of "no shelf" to make a condition of searching for a route less restricted (having a possibility of newly finding a shorter route), the processing proceeds to step S307. After that, the map information 31 is updated to search for a route, according to the setting. However, "YES" and "NO" in step S305 may be reversed, for example, and if a cell is changed to make a condition of searching for a route harder (having to give up the shortest path, but collision of the shelf 51 being preventable), the processing may proceed to step S307.

In the example described above, the transport vehicle 2 in failure is assumed to be restored soon. In addition, it is assumed that even if there is an obstacle in a cell, it is immediately cleared by a worker or another system. However, if safety is intended to have a higher priority than improving transportation efficiency or shortening a transportation time, the processing may proceed to step S307, for example, immediately after "YES" in step S304. In this case, the data transceiver 21 of the transport vehicle control device 1 may transmit an instruction to the effect of immediately making an emergency stop to the transport vehicles 2 which are specified in the transport vehicle IDs of all candidate-for-change route information records. Alternatively, the data transceiver 21 may transmit an instruction to the effect of continuing the travel for a while and then stopping in a cell just before the cell having a cell state of "non-travelable."

In the example described above, the process is completed if there is no transport vehicle 2 that is planned to travel through the cell. However, the process may proceed to step S307 immediately after "YES" in step S303, and further to step S308 immediately thereafter, before the processing is completed. In this way, the map information is updated. Therefore, this is effective if there is a transport vehicle 2 that is newly planned to travel through the cell.

### [Cell-for-rearranged-shelf Determination Procedure]

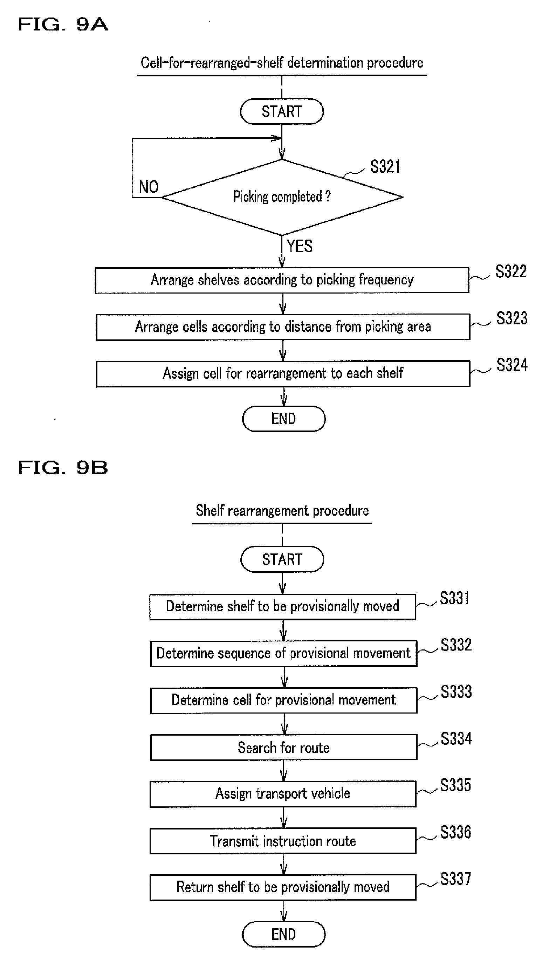

The cell-for-rearranged-shelf determination procedure will be described with reference to FIG. 9A.

In step S321, the cell-for-rearranged-shelf determiner 24 of the transport vehicle control device 1 determines whether picking has been completed. Specifically, the cell-for-rearranged-shelf determiner 24 proceeds to step S322 if a type 2 record of the article information 32 (see FIG. 5B) is created ("YES" in step S321). Otherwise ("NO" in step S321), the cell-for-rearranged-shelf determiner 24 waits until a type 2 record is created.

In step S322, the cell-for-rearranged-shelf determiner 24 arranges the shelves according to the picking frequency. More specifically, the cell-for-rearranged-shelf determiner 24 first obtains records, which satisfy all of the following conditions, from the article information 32 (see FIG. 5B).
- It is a type 2 record; and
- The picking time falls between the present time and a predetermined period of time (e.g., one week) earlier.

Second, the cell-for-rearranged-shelf determiner 24 sorts records obtained in the first portion of step S322 by shelf ID, and obtains the number of records for each shelf ID. Then, data such as "(shelf ID, the number of records) = (T001, 50), (T002, 70), (T003, 40), (T004, 60), - - -" is obtained.

Third, the cell-for-rearranged-shelf determiner 24 rearranges the shelf IDs in descending order of the number of records. In this example, the shelf IDs are rearranged so as to be "T002, T004, T001, T003, - - -."

In step S323, the cell-for-rearranged-shelf determiner 24 arranges the cells according to the distance from the picking area. Specifically, the cell-for-rearranged-shelf determiner 24 first obtains records, which satisfy all of the following conditions, from the map information 31 (see FIG. 5A).
- The cell state is "no shelf."
- The cell identified in the cell ID does not match one in "< >" which is included in the instruction of the record of the route information 33 (see FIG. 6A). Here, the record of the route information 33 is limited to one having the transmission time which falls between the present time and a predetermined period of time (e.g., one minute) earlier.
- The cell is located in the provisional storage area described above (see FIG. 3). The provisional storage area has a short enough distance from the picking area. Note that this condition is not essential.

Second, the cell-for-rearranged-shelf determiner 24 rearranges the cell IDs of the records obtained in the first portion of step S323 in ascending order of the distance between the picking area and the cell. The distance here is one which the transport vehicle 2 travels between the cell and the picking area (not the inclined straight-line distance). As a result, the cell IDs are rearranged such as "R0804, R0603, R0507, R0308, - - - ."

In step S324, the cell-for-rearranged-shelf determiner 24 assigns a cell for rearrangement to each shelf. Specifically, the shelves rearranged in the third portion of step S322 are associated with the cells rearranged in the second portion of step S323. As a result, data such as "(shelf ID, cell ID) = (T002, R0804), (T004, R0603), (T001, R0507), (T003, R0308), - - -" is obtained.

The cell-for-rearranged-shelf determiner 24 stores the obtained data in the auxiliary storage device 15, and then ends the cell-for-rearranged-shelf determination procedure.

The route searcher 23 of the transport vehicle control device 1 searches for a route through which the transport vehicle 2 moves a shelf 51 based on the data obtained in step S324. For example, a route for moving the shelf "T002" from the cell where the shelf is currently located to the cell "R0804" is searched. The actual movement may be made, for example, on its way returning from the picking area.

Note that, if the cell for rearrangement is determined to be in the provisional storage area, the cell-for-rearranged-shelf determiner 24 measures a time for the shelf 51 to continuously sit in the provisional storage area. Then, if the time exceeds a predetermined threshold value, the shelf 51 is determined to be transported to a cell outside the provisional storage area.

### [Modifications of Cell-for-rearranged-shelf Determination Procedure]

In the second portion of step S322, the cell-for-rearranged-shelf determiner 24 may obtain the sum of the absolute values of the quantities for each shelf ID, instead of the number of records.

In the first portion of step S322, the cell-for-rearranged-shelf determiner 24 may use a condition of "i) it is a type 1 record" instead of being the type 2 record. In addition, a condition of "ii) it is a type 1 record, and the picking time has a date of the present time (current day)" may be used. Further, in the case of ii), the cell-for-rearranged-shelf determiner 24 may rearrange the shelf IDs, in the third portion of step S322, in descending order of "a ratio of the absolute value of quantity on the current day to the total number of articles stored on the shelf."

### [Shelf Rearrangement Procedure]

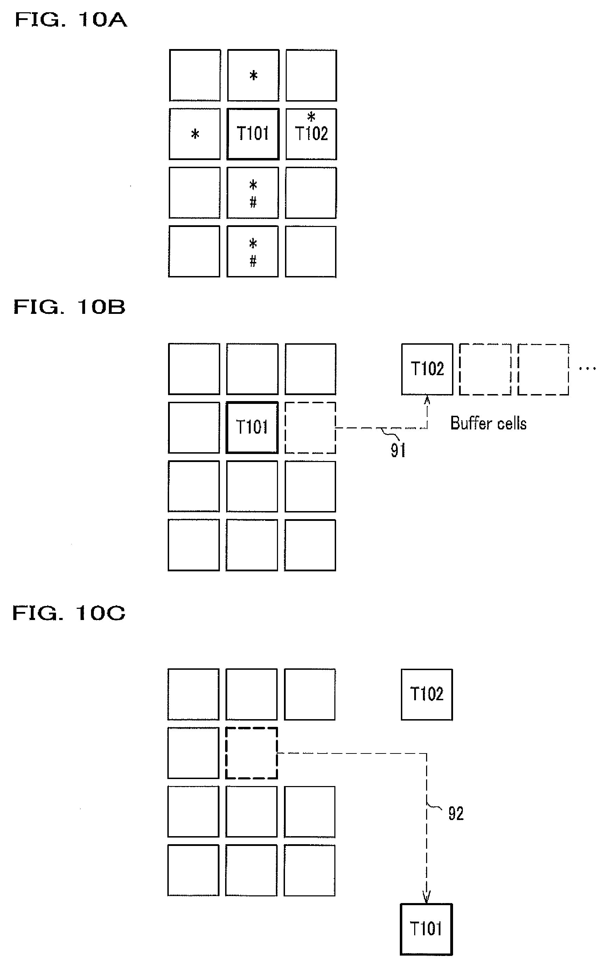

Prior to describing FIG. 9B, assumptions will be described for the shelf rearrangement procedure with reference to FIGS. 10A-10C. FIG. 10A shows shelves 51 arranged before shelf rearrangement. The shelf "T101" need to be transported, for such a reason as the frequency of being transported to the picking area is high, to a cell which has a shorter distance from the picking area than the current cell. However, the shelf "T101" is in a state of being surrounded by other shelves. In this case, in order to secure a route to the cell where the shelf "T101" is to be rearranged, the transport vehicle 2 provisionally moves the other shelf "T102" (see FIG. 10B). Next, the transport vehicle 2 actually moves the shelf "T101" to the cell for rearrangement (see FIG. 10C). In addition, the transport vehicle 2 moves the shelf "T102," which has been provisionally moved, back to the original cell. In this example, the shelf "T101" is referred to as a "shelf to be rearranged" and the shelf "T102" is referred to as a "shelf to be provisionally moved." The cell for rearranging the shelf to be rearranged is referred to as a "destined cell."

Referring back to FIG. 9B, the shelf rearrangement procedure will be described.

In step S331, the transport vehicle control device 1 determines the shelf to be provisionally moved. Specifically, the route searcher 23 of the transport vehicle control device 1 first obtains the shortest route for the transport vehicle 2 transporting the shelf to be rearranged from the cell where the shelf is now located to the destined cell. At this time, the route searcher 23 searches for a route on the assumption that the cells having all the shelves which the shelf to be rearranged must come across before exiting to any passage outside the block will have a state of "no shelf." In FIG. 10A, the shelf "T101" is the shelf to be rearranged. Accordingly, all the shelves which the shelf "T101" must come across before exiting to any passage are five shelves (denoted by "*") at the left and right sides and at the upper and lower sides within the block, inclusive of the shelf "T102."

Second, the shelf rearranger 25 of the transport vehicle control device 1 identifies the shelves on the route obtained in the first portion of step S331 as the shelves to be provisionally moved. Now, it is assumed that the route obtained in the first portion of step S331 is a route 92 in FIG. 10C. Then, the shelf rearranger 25 identifies the shelf "T102" as the shelf to be provisionally moved. Two or more shelves to be provisionally moved may exist in some cases.

In step S332, the shelf rearranger 25 determines a sequence of provisional movement. Specifically, the shelf rearranger 25 determines a sequence of the shelves to be provisionally moved, which have been identified in the second portion of step S331, in ascending order of the distance between the cell where the shelf is currently located and the destined cell. In the example in FIG. 10A, there is only one shelf to be provisionally moved (i.e., shelf "T102"). However, there may be two shelves to be provisionally moved (denoted by "#") in some case. In this case, one shelf closer to a passage is determined to have a sequence number of "1" and the other shelf to have a sequence number of "2." This sequence is referred to as a sequence of provisional movement.

In step S333, the shelf rearranger 25 determines a cell for provisional movement. Specifically, the shelf rearranger 25 determines any cell which is not on the route 92 (see FIG. 10C) as a cell for provisional movement. The shelf rearranger 25 specifies in advance a sufficient number of consecutive cells as "buffer cells" (see FIG. 10B), and if there are two or more shelves to be provisionally moved, the buffer cells in descending order of the distance from the destined cells are sequentially assigned (from right to left) to the shelves having a smaller sequence number of provisional movement (earlier timing of movement) as the cells for provisional movement.

In step S334, the route searcher 23 searches for a route. Specifically, the route searcher 23 first obtains the shortest route 91 (see FIG. 10) for the transport vehicle 2 transporting the shelf to be provisionally moved, having the smallest sequence number of provisional movement, to the buffer cell.

Second, the route searcher 23 obtains the shortest route for the transport vehicle 2 transporting the shelf to be provisionally moved, having the next smallest sequence number of provisional movement, to the buffer cell. Then, the same processing is repeated as many times as the number of shelves to be provisionally moved.

In step S335, the shelf rearranger 25 assigns the transport vehicles 2. Specifically, the shelf rearranger 25 assigns the transport vehicles 2 to the shelves to be provisionally moved, respectively, for transporting the shelves. The shelf rearranger 25 assigns the transport vehicles 2 which are located in the closest cells from the cells where respective shelves to be provisionally moved are located. In this case, the transport vehicles 2 are required as many as the number of the shelves to be provisionally moved. The shelf rearranger 25 may repeatedly use a particular or any transport vehicle 2 to transport all the shelves to be provisionally moved.

In step S336, the data transceiver 21 of the transport vehicle control device 1 transmits an instruction route. Specifically, the data transceiver 21 transmits an instruction to the transport vehicle 2 assigned in step S335. The instruction includes the route obtained in step S334 as the instruction route, and an instruction operation for transporting the shelf to be provisionally moved from the current cell to the buffer cell.

In step S337, the shelf rearranger 25 returns the shelves to be provisionally moved. Specifically, the shelf rearranger 25 transports the shelves to be provisionally moved to the original cells, in descending order of the sequence number of provisional movement. The processing is made in reverse order of the processing in steps S334 to S336 described above.

### [Advantageous Effects of Present Embodiment]

The transport vehicle control device of the present embodiment has following advantageous effects:
1) A route through which a transport vehicle is traveling is revised in real time, according to reports from the transport vehicles on a state of the cells, and the revised results are viewable on the screen;
2) Those shelves that store articles which are frequently picked are transported closer to the picking area;
3) A determination is made, depending on the changed state of the cell, whether the map information is updated immediately or later at the next reporting time;
4) A shelf which has been sitting in the provisional storage area for a certain period of time is transported outside the area to allow the shelf storing articles, which are frequently picked at the present time, to be surely transported to the provisional storage area;
5) A shelf is rearranged even when the shelf is surrounded by other shelves;
6) A state of the cell is one of "with shelf," "no shelf," or "non-travelable," and is easily identified by the transport vehicle;
7) A timing of updating the map is flexibly determined for a case where the cell state has been changed from "with shelf" to "no shelf;" and
8) A timing of updating the map is flexibly determined for a case where the cell state has become "non-travelable."

Note that the present invention is not limited to the embodiment described above, and includes various modifications. For example, the embodiment hereinabove is described in detail in order to illustrate the present invention, and is not necessarily limited to include the entire configuration as described. A part of the configuration of an embodiment may be replaced by the configuration of another embodiment, and/or the configuration of an embodiment may be added with the configuration of another embodiment. In addition, a part of the configuration of each embodiment may be removed, or added with and/or replaced by another configuration.

Further, each configuration, function, processing portion, and/or processing means described above may be implemented in part or entirely by hardware such as an integrated circuit. Each configuration and/or function described above may be implemented by software by the processor interpreting and executing programs for implementing the respective functions. Information such as program for implementing respective functions, tables, and files can be stored in a recording device such as a memory, a hard disk, and a Solid State Drive (SSD), or a recording medium such as an IC card, an SD card, and a DVD.

Furthermore, the control lines and information lines are shown for the purpose of illustration, and all control lines and information lines in the product are not necessarily shown. In fact, it may be safe to say that almost all components are connected with one another.

### LEGEND FOR RERERENCE NUMERALS

- 1: Transport vehicle control device
- 2: Transport vehicle
- 3: Wireless network
- 11: Central control unit
- 12: Input device
- 13: Output device
- 14: Main memory
- 15: Auxiliary storage device
- 16: Communication device
- 21: Data transceiver
- 22: Map manager
- 23: Route searcher
- 24: Cell-for-rearranged-shelf determiner
- 25: Shelf rearranger
- 26: Data transceiver
- 27: Power manager
- 31: Map information
- 32: Article information
- 33: Route information
- 41: Microcomputer
- 42: Communication device
- 43: Sensor
- 44: Tag reader
- 45: Power unit
- 46: Battery
- 71: Report

## Claims

1. A transport vehicle control device comprising:
a storage portion that stores map information in which a state of a cell where a rack is arranged is saved for each cell;
a data transceiver that receives the latest state of the cell from a transport vehicle which transports the rack;
a map manager that updates the map information, each time the data transceiver receives the latest state of the cell, using the latest state of the cell received; and
a route searcher that searches for a route for the transport vehicle transporting the rack based on the map information updated.

2. The transport vehicle control device according to claim 1, further comprising:
a cell-for-rearranged-rack determiner that determines a cell into which the rack is rearranged on the basis of a usage frequency of articles to be stored on the rack.

3. The transport vehicle control device according to claim 2,
wherein the map manager determines, based on a difference between the state of the cell stored in the storage portion and the latest state of the cell received, whether to update the map information before receiving the latest state of the cell at the next time.

4. The transport vehicle control device according to claim 3,
wherein if a time for the rack to continuously sit in a cell where the rack has been rearranged exceeds a predetermined threshold value, the cell-for-rearranged-rack determiner determines to transport the rack outside the cell where the rack has been rearranged.

5. The transport vehicle control device according to claim 4, further comprising:
a shelf rearranger that, on the condition that the rack is rearranged, identifies other racks, which are on a route for the rack to be transported from the current cell to the cell to be rearranged, as racks to be provisionally moved; determines, on the condition that there are two or more of the racks to be provisionally moved, sequence of temporarily transporting the respective racks to be provisionally moved to buffer cells; and identifies the transport vehicles which transports the respective racks to be provisionally moved.

6. The transport vehicle control device according to claim 5,
wherein the state of the cell is one of a first state of the rack being placed in the cell, a second state of the rack not being placed in the cell, and a third state of the transport vehicle not being travelable in the cell.

7. The transport vehicle control device according to claim 6,
wherein on the condition that the state of the cell has been changed from the first state to the second state, the map manager determines whether to update the map information before receiving the latest state of the cell at the next time.

8. The transport vehicle control device according to claim 7,
wherein on the condition that the state of the cell has been changed from a state other than the third state to the third state, the map manager determines whether to update the map information before receiving the latest state of the cell at the next time.

9. A transport vehicle control method, for use in a transport vehicle control device having: a storage portion that stores map information in which a state of a cell where a rack is arranged is saved for each cell; a data transceiver; a map manager; and a route searcher,
the method comprising:
receiving, by the data transceiver, the latest state of the cell from a transport vehicle which transports the rack;
updating, by the map manager, the map information, each time the data transceiver receives the latest state of the cell, using the latest state of the cell received; and
searching, by the route searcher, for a route for the transport vehicle transporting the rack based on the map information updated.

10. The transport vehicle control method according to claim 9, for use in the transport vehicle control device further having a cell-for-rearranged-rack determiner,
the method further comprising:
determining, by the cell-for-rearranged-rack determiner, a cell into which the rack is rearranged on the basis of a usage frequency of articles to be stored on the rack.
